# EUROPEAN PATENT SPECIFICATION

(11) **EP 2 533 602 B1**
(45) Date of publication and mention of the grant of the patent: **31.07.2019**
(21) Application number: 10845098.2
(22) Date of filing: 25.10.2010
(51) Int. Cl.: H04W 88/08, H04W 92/12, H04B 10/00

(54) **RADIO REMOTE UNIT AND SELF-ADAPTING METHOD FOR UPPER AND LOWER CONNECTION OF OPTICAL INTERFACE THEREOF**
FUNKFERNEINHEIT UND SELBSTANGEBPASSTES VERFAHREN ZUR OBEREN UND UNTEREN VERBINDUNG EINER OPTISCHEN SCHNITTSTELLE DAFÜR
UNITÉ RADIO DISTANTE ET PROCÉDÉ AUTO-ADAPTATIF POUR CONNEXIONS SUPÉRIEURE ET INFÉRIEURE DE SON INTERFACE OPTIQUE

(30) Priority: 02.02.2010 CN 201019164055
(43) Date of publication of application: 12.12.2012
(73) Proprietor: ZTE Corporation, Shenzhen, Guangdong 518057 (CN)
(72) Inventor: YANG, Tao, Shenzhen Guangdong 518057 (CN); WU, Jun, Shenzhen Guangdong 518057 (CN)
(74) Representative: Novagraaf Technologies
(86) International application number: PCT/CN2010/078072
(87) International publication number: WO 2011/095015

(56) References cited:
- EP-A1- 1 713 290
- WO-A1-2006/040653
- WO-A1-2007/079611
- CN-A- 1 652 520
- CN-A- 101 242 435
- CN-A- 101 437 320
- US-B1- 6 493 320

## Description

### Field of the Invention

The present invention relates to the communication field, in particular to a Radio Remote Unit (RRU) in a base station device and a self-adapting method for upper and lower connections of optical interfaces thereof.

### Background of the Invention

The distributed base station structure processes baseband signals and intermediate radio frequency signals separately and makes the radio frequency part remote by optical fibers, wherein the main control part and the baseband processing part are known as the Base Band Unit (BBU), and the digital intermediate frequency processing part and the radio frequency part are known as the RRU.

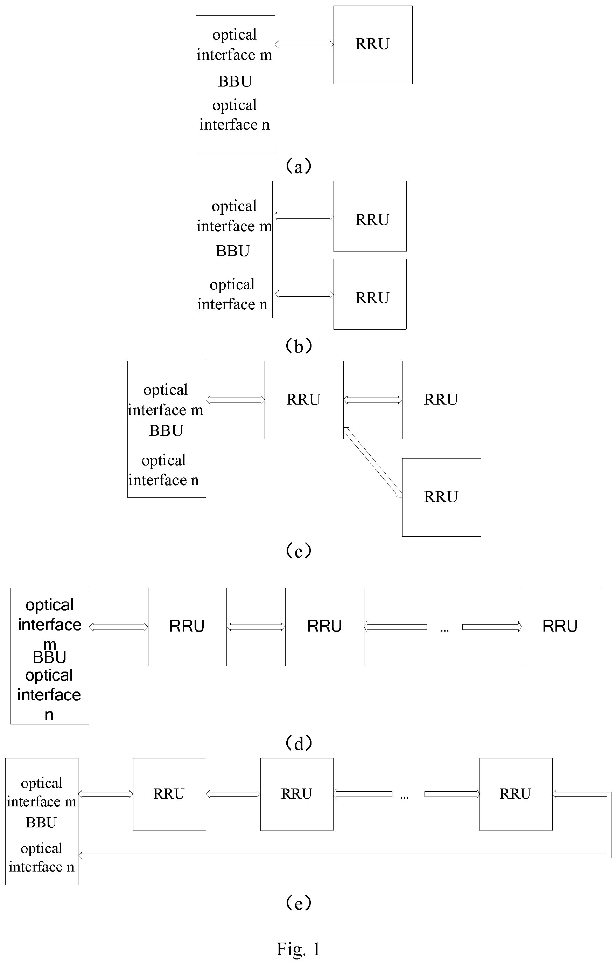

The BBU and the RRU are connected with each other in an open interface standard, and all commonly used interface standards support or can be extended to support a plurality of network topologies, e.g. the single point connection, multi-point connection, star connection, chain connection and ring connection etc. between the BBU and the RRU. Fig. 1 is a network topology map illustrating various connections between the BBU and the RRU, in which (a) shows the single point connection, (b) shows the multi-point connection, (c) shows the tree networking, (d) shows the chain networking and (e) shows the ring networking. The BBU and the RRU are physically connected with each other by an optical fiber, and there are two or more optical interfaces existing on both the BBU and the RRU.

In the RRU, the upper connection optical interface refers to an optical interface connected with the BBU or an optical interface of the RRU of the previous level, the lower connection optical interface refers to an optical interface connected with the RRU of the next level. In the ring networking, the upper connection optical interface further refers to an optical interface connected to the BBU main optical interface and the lower optical interface further refers to an optical interface connected to the BBU standby optical interface. Normally, locations of RRU's upper and lower connection optical interfaces and physical optical interface are fixed, e.g. the upper connection optical interface is fixed as the optical interface 1 and the lower connection optical interface is fixed as the optical interface 2, which leads to the following evident disadvantages: 1. links between the BBU and the RRU cannot be established if optical fiber is incorrectly connected, which is unfavorable for engineering construction; 2. applications of various networking forms of the base station device, especially the application of the ring networking, are restricted by the fixed upper and lower connection optical interfaces; 3. with the increase of the processing capability of the RRU device, there may be a plurality of upper connection optical interfaces and a plurality of lower connection optical interfaces on the RRU, such that the fixed upper and lower connection optical interfaces restrict the application of multiple optical interfaces of the RRU; 4. real-time self-adaptation of the upper and lower connections of the optical interfaces is required to ensure that the communication is not interrupted by the hot swap of the optical fibres. Therefore, the self-adaptation technology of optical interfaces is of great importance during the practical application of the base station device.

EP-A-1,713,290 discloses a distributed base station system. A base band unit and RF unit of the base station system are separated and the RFU is equipped with base band RF interfaces for interconnecting the base band unit and transmitting data, thereby forming the base station.

WO-A-2007/079611 discloses a remote radio unit and a loop networking system. The remote radio unit includes a transceiver and a remote radio interface. The remote radio interface includes a first and second optical interface module.

### Summary of the Invention

The present invention provides a RRU and a self-adapting method for upper and lower connections of optical interfaces thereof to resolve the problem above in the traditional art caused by fixed locations of the optical interfaces of the upper and lower connections and the physical optical interfaces of the RRU. The present invention is able to exactly determine the upper and lower connection optical interfaces, and has good adaptability.

The present invention provides a self-adapting method for upper and lower connections of optical interfaces of a RRU, the method comprises:
initiating the RRU and turning off signal transmission of each optical interface of the RRU;
determining an upper and lower connection flag bit for each optical interface;
determining a reference resource of a phase-locked clock of the RRU according to the upper and lower connection flag bit;
turning on the signal transmission of each optical interface after phase-locked loop is locked.

Preferably, the upper and lower connection flag bit of each optical interface is determined according to the following way:
A1: judging whether there is an alarm at each optical interface, if YES, the upper and lower connection flag bit of the corresponding optical interface is set as a lower connection optical interface; otherwise, the upper and lower connection flag bit of the corresponding optical interface is set as an upper connection optical interface;
A2: judging whether the upper and lower connection flag bits of individual optical interfaces are different, if they are different, implementing Step A4; otherwise, implementing Step A3;
A3: judging whether the upper and lower connection flag bit is the upper connection optical interface; if it is the upper connection optical interface, implementing Step A4; otherwise, setting the upper and lower connection flag bit of each optical interface as a default value and then implementing Step A4;
A4: implementing the step in which the reference resource of the phase-locked clock of the RRU is determined.

Preferably, in Step A1, if there is no alarm at the corresponding optical interface, the following steps are comprised before implementing Step A2:
A11: judging whether physical layer signalling received by the corresponding optical interface is abnormal; if it is abnormal, implementing Step A14, otherwise, implementing Step A12;
A12: calculating a check sum of the physical layer signalling, and judging whether a check sum carried by the physical layer signalling is consistent with the check sum acquired by calculation, if the check sum carried by the physical layer signalling is consistent with the check sum acquired by calculating, implementing Step A13; otherwise, implementing Step A14;
A13: judging whether an Identity (ID) carried by the physical layer signalling is in a valid ID range; if the ID carried by the physical layer signalling is in the valid ID range, setting the upper and lower connection flag bit of the optical interface as an upper connection optical interface, and then implementing Step A2; otherwise, implementing Step A14;
A14: setting the upper and lower connection flag bit of the corresponding optical interface as a lower connection optical interface, and then implementing Step A2.

Preferably, the reference resource of the phase-locked clock of the RRU is a recovered clock of the upper connection optical interface.

Preferably, the method above further comprises the following operation after initiating the RRU and turning on the signal transmission of each optical interface:
judging whether to switch the reference resource of the phase-locked clock which is currently used by the RRU according to the upper and lower connection flag bit of each optical interface.

Preferably, whether to switch the reference resource of the phase-locked clock which is currently used by the RRU is judged by the following way:
B1: periodically and continuously reading the upper and lower connection flag bit of each optical interface for predetermined times and judging whether the reading result from different readings are consistent; if YES, implementing Step B4; otherwise, implementing Step B2;
B2: adding a counter by 1, judging whether the counting value of the counter is larger than a predetermined tolerant number; if YES, implementing Step B3; otherwise, implementing Step B1;
B3: restarting the RRU, and ending the process;
B4: clearing the counter and judging whether the upper and lower connection flag bit of each optical interface is consistent with the reference resource of the phase-locked clock which is currently used by the RRU; if the upper and lower connection flag bit of each optical interface is consistent with the reference resource of the phase-locked clock which is currently used by the RRU, there is no need for switching; otherwise, implementing Step B5;
B5: re-determining a reference resource of the phase-locked clock of the RRU according to the upper and lower connection flag bit of each optical interface, and switching the reference resource of the phase-locked clock which is currently used by the RRU to the re-determined reference resource of the phase-locked clock of the RRU.

The present invention further provides an RRU, which comprises an optical interface module with at least two optical interfaces, an initialization module, and a clock module, and an upper and lower connections self-adaptive module, wherein
the initialization module is configured to initiate the RRU and turn off signal transmission of each optical interface of the optical interface module;
the upper and lower connection self-adaptive module is configured to determine and record an upper and lower connection flag bit for each optical interface;
the clock module is configured to determine a reference resource of a phase-locked clock of the RRU according to the upper and lower connection flag bit, and turn on the signal transmission of each optical interface after the phase-locked loop is locked.

Preferably, the RRU further comprises a data receiving and transmitting module, which is configured to receive physical layer signalling on the corresponding optical fiber link of each optical interface in the optical interface module, and forward the physical layer signalling to the upper and lower connections self-adaptive module;

The clock module is further configured to judge whether to switch the reference resource of the phase-locked clock of the RRU, and switch the reference resource of the phase-locked clock of the RRU if the judgment result is YES.

Preferably, the upper and lower connection self-adaptive module comprises a judgment sub-module and an upper and lower connection flag bit sub-module, wherein
the judgment sub-module is configured to judge whether there is an alarm at each optical interface, judge whether the upper and lower connection flag bits of individual optical interfaces are different, judge whether the upper and lower connection flag bit is the upper connection optical interface if the upper and lower connection flag bits of individual optical interfaces are not different, judge whether the physical layer signalling of the corresponding optical interface is abnormal when there is no alarm at the corresponding optical interface, calculate a check sum of the physical layer signalling, and judge whether a check sum carried by the physical layer signalling is consistent with the check sum acquired by the calculation, and judge whether an ID carried by the physical layer signalling is in a valid ID range;
the upper and lower connection flag bit sub-module is configured to record the upper and lower connection flag bit of each optical interface according to the judgment results of the judgment sub-module, set the upper and lower connection flag bit of the corresponding optical interface as a lower connection optical interface when there is an alarm at each optical interface, or when the physical layer signalling of the corresponding optical interface is abnormal, or when the check sum carried by the physical layer signalling is not consistent with the check sum acquired by the calculation or when the ID carried by the physical layer signalling is not in the valid ID range, and set the upper and lower connection flag bit of the corresponding optical interface as an upper connection optical interface when the ID carried by the physical layer signalling is in the valid ID range.

Preferably, the clock module comprises a reading sub-module, a phase-locked clock reference resource sub-module, a switching sub-module and a phase-locked sub-module, wherein
the reading sub-module is configured to read the upper and lower connection flag bit of each optical interface;
the phase-locked clock reference resource sub-module is configured to determine the reference resource of the phase-locked clock for the RRU;
the switching sub-module is configured to judge whether or not the reading result each time by the reading sub-module during different readings are consistent, judge whether a counting value of a counter is larger than a predetermined tolerant number, judge whether the upper and lower connection flag bit of each optical interface is consistent with the reference resource of the phase-locked clock which is currently used by the RRU, clear the counter, restart the RRU and switch the reference resource of the phase-locked loop clock for the RRU; and
the phase-locked sub-module is configured to turn on the signal transmission of each optical interface after phase-locked loop is locked.

The present invention realizes self-adaptation of the upper and lower connections of the optical interfaces of the RRU, and is able to exactly determine the upper and lower connection flag bit of the optical interface, which ensures the stability of the flag bit, it is of great importance during the application of the base station device, e.g. engineering construction, realization of ring networking, multi-optical interface application and hot swap of optical fibre etc.. The present invention can be applied to all cascaded RRUs in a base station network, it poses no restrictions on the communication mode of the base station device or the standards of the interfaces between the BBU and the RRU, and therefore it has good adaptability.

### Brief Description of the Drawings

Fig. 1 is a network topology map illustrating various connections between the BBU and the RRU;
Fig. 2 is a flowchart of the first embodiment of the method of the present invention;
Fig. 3 is a flowchart of the second embodiment of the method of the present invention;
Fig. 4 is a flowchart of the first embodiment of a method for judging whether to switch the reference resource of the phase-locked clock which is currently used by the RRU of the disclosure;
Fig. 5 is a principle block diagram of the first embodiment of the RRU of the disclosure; and
Fig. 6 is a principle block diagram of the second embodiment of the RRU of the disclosure.

### Detailed Description of the Embodiments

The RRU and the self-adapting method for upper and lower connections of optical interfaces thereof provided by the present invention will be described hereinafter with reference to the accompanying drawings and preferred embodiments in detail.

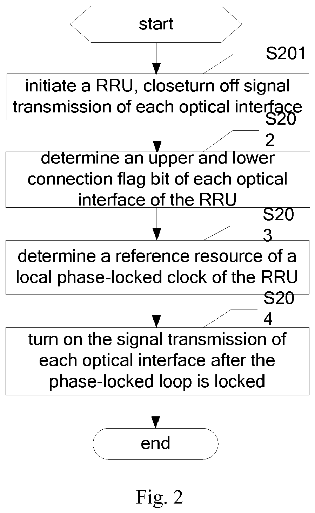

Fig. 2 is a flowchart of the first embodiment of the method of the present invention, comprising the following steps:
Step S201: initiating the RRU and turning off the signal transmission of each optical interface of the RRU.
   This step is implemented only when the RRU is powered on or restarted (i.e. started), if the RRU has already worked normally, this step will not be implemented. After the initialization, each optical interface is defaulted as turning off the signal transmission and only receives signals. At the moment, the upper and lower connection flag bit of each optical interface is set as the default value which can be a value preset as required or the value used when each optical interface works normally last time.
Step S202: determining an upper and lower connection flag bit for each optical interface of the RRU.
   The physical optical interface of the RRU is not fixedly configured as the upper connection optical interface or the lower connection optical interface in the present invention. Although each optical interface has been configured as the upper connection optical interface or the lower connection optical interface after the initialization by default, the default upper connection optical interface or lower connection optical interface is not always applicable to the current situation during the specific application. Therefore, it is needed to determine whether the optical interface is the upper connection optical interface or the lower optical interface in the current situation according to the specific conditions. The present invention identifies the corresponding optical interface as the upper connection optical interface or the lower connection optical interface by the form of the upper and lower connection flag bit.
Step S203: determining a reference resource of a phase-locked clock of the RRU according to the upper and lower connection flag bit.
   The reference resource of the phase-locked clock of the RRU is the recovered clock of the upper connection optical interface. If there is a plurality of upper connection optical interfaces, the recovered clock of one of the upper connection optical interfaces is selected as the reference resource of the phase-locked clock and the selection strategy can be set in real time.
Step S204: turning on the signal transmission of each optical interface after the phase-locked loop is locked.
   After the reference resource of the phase-locked clock is determined, the phase-locked loop will be locked to synchronize the RRU clock and the BBU clock. After the phase-locked loop is locked, the signal transmission of the optical interface can be turned on. At the moment, the optical interface enters normal working status, i.e. the optical interface is able to receive and transmit data. Similar to Step S201, this step is implemented only when the RRU is powered on or restarted.

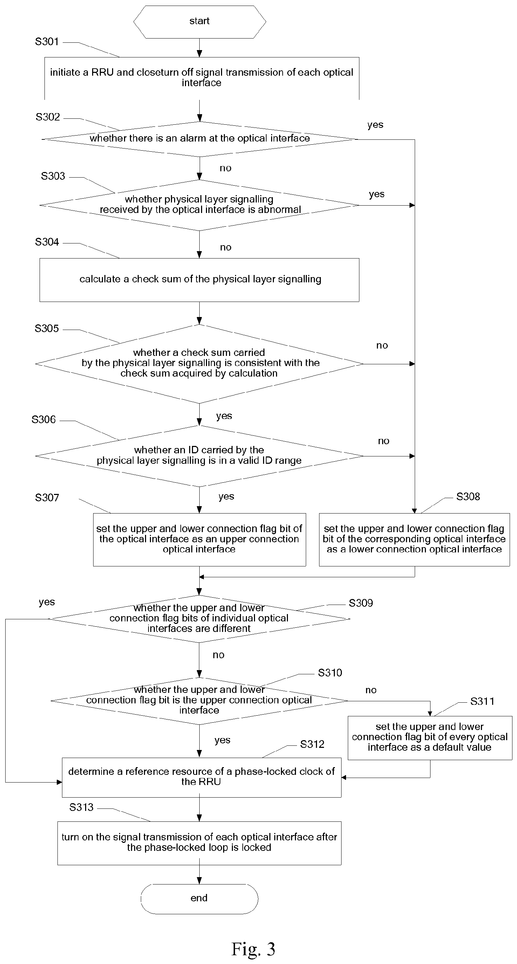

Fig. 3 is a flowchart of the second embodiment of the method of the present, comprising the following steps:
Step S301: initiating the RRU and turning off the signal transmission of each optical interface of the RRU.
   Similar to the first embodiment above, this step is implemented only when the RRU is powered on or restarted (i.e. started) and is not implemented if the RRU has already worked normally.
Step S302: judging whether there is an alarm at each optical interface; if there is an alarm at each optical interface, implementing Step S308; otherwise, implementing Step S303.
Step S303: judging whether the physical layer signalling received by each optical interface is abnormal, if the physical layer signalling received by each optical interface is abnormal, implementing Step S308; otherwise, implementing Step S304.
Step S304: calculating a check sum of the physical layer signalling.
Step S305: judging whether the check sum carried by the physical layer signalling is consistent with the check sum acquired by calculation, if the check sum carried by the physical layer signalling is consistent with the check sum acquired by calculation, implementing Step S306; otherwise, implementing Step S308.
Step S306: judging whether an ID carried by the physical layer signalling is in a valid ID range; if the ID carried by the physical layer signalling is in the valid ID range, implementing Step S307; otherwise, implementing Step S308.

During the specific application, the system will assign an ID for each RRU. The ID will be sent to the RRU at every level with the ID being as a field of the physical layer signalling. The information of the ID assignment rule and the ID valid range will be sent along with the ID. After the optical interface receives the physical layer signalling, the RRU will determine whether the optical interface is an upper connection optical interface or a lower connection optical interface according to the ID and the ID valid range information carried in the physical layer signalling, and forward the ID and the ID valid range information according to the ID assignment rule at the same time.

This embodiment performs a dual-judgment (i.e. Step S303 and Step S305) for the physical layer signalling to ensure the accuracy and stability of the upper and lower connection flag bit of the optical interface.

Normally, it is not needed to implement Step S303-Step S306 when the RRU is powered on or restarted (i.e. started), the exact upper and lower connection flag bit of the optical interface can be determined only according to the existence of alarm at the optical interface, i.e. when there is an alarm at the optical interface, the upper and lower connection flag bit of the optical interface is set as a lower connection optical interface, i.e. Step S308 is implemented; when there is no alarm at the optical interface, the upper and lower connection flag bit of the optical interface is set as an upper connection optical interface, i.e. Step S307 is implemented; however, after the RRU works normally, Step S303-Step S306 above need to be performed to ensure the accuracy and stability of the upper and lower connection flag bit of the optical interface.

Step S307: setting the upper and lower connection flag bit of the optical interface as an upper connection optical interface, turning to Step S309 and implementing Step S309.

Step S308: setting the upper and lower connection flag bit of the corresponding optical interface as a lower connection optical interface, and implementing Step S309.

Step S309: judging whether the upper and lower connection flag bits of individual optical interfaces are different; if different, implementing Step S312; otherwise, implementing Step S310.

Step S310: judging whether the upper and lower connection flag bit is the upper connection optical interface; if the upper and lower connection flag bit is the upper connection optical interface, implementing Step 312; otherwise, e.g. all optical interfaces are the lower connection optical interfaces, and the acquired upper and lower connection flag bit of each optical interface is regarded as an error, implementing Step S311.

Step S311: setting the upper and lower connection flag bit of each optical interface as a default value.

The default value above can be a value preset as required or the value used when each optical interface works normally last time.

Step S312: determining the reference resource of the phase-locked clock of the RRU according to the upper and lower connection flag bit.

Step S313: turning on the signal transmission of each optical interface after the phase-locked is locked, then.

After this step is implemented, each optical interface enters normal working status. At the moment, the present invention further judges whether to switch the reference resource of the phase-locked clock which is currently used by the RRU according to the upper and lower connection flag bit of each optical interface.

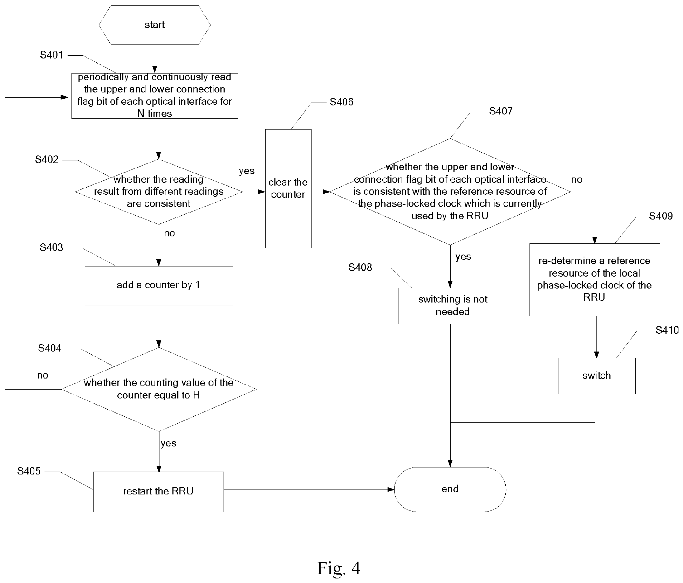

Fig. 4 is a flowchart of the first embodiment of the method for judging whether to switch the reference resource of the phase-locked clock which is currently used by the RRU of the disclosure, comprising:
Step S401: periodically and continuously reading the upper and lower connection flag bit of each optical interface for predetermined times N.
   In this step, the upper and lower connection flag bit of each optical interface is read periodically and continuously for N times to prevent reading errors caused by jittering in the reading process.
Step S402: judging whether the reading results from different readings are consistent; if the reading results are consistent, implementing Step S406; otherwise, implementing Step S403.
   The inconsistency of the reading results from different readings indicates the instability of the upper and lower connection flag bit of each optical interface.
Step S403: adding a counter by 1.
Step S404: judging whether the counting value of the counter is larger than a predetermined tolerant number H; if the counting value of the counter is larger than the predetermined tolerant number, implementing Step S405; otherwise, implementing Step S401.
   When the counting value of the counter is larger than the predetermined tolerant number H and the upper and lower connection flag bit of each optical interface is still unstable, the RRU needs to be restarted to re-determine the upper and lower connection flag bit of each optical interface.
Step S405: restarting the RRU, and the process ends.
   After the RRU is restarted, it are performed starting from Step S301 above.
Step S406: clearing the counter.
Step S407: judging whether the upper and lower connection flag bit of each optical interface is consistent with the reference resource of the phase-locked clock which is currently used by the RRU; if the upper and lower connection flag bit of every optical interface is consistent with the reference resource of the phase-locked clock which is currently used by the RRU, implementing Step S408; otherwise, implementing Step S409.
Step S408: the reference resource of the phase-locked clock which is currently used by the RRU does not need to be switched.
Step S409: re-determining a reference resource of the phase-locked clock of the RRU according to the upper and lower connection flag bit of each optical interface;
Step S410: switching the reference resource of the phase-locked clock which is currently used by the RRU to the re-determined reference resource of the phase-locked clock.

In the present invention, after the RRU is initialized, the upper and lower connection flag bit of each optical interface is assigned with a default value. At this time, the upper and lower connection flag bit of each optical interface is not the optimal value, therefore is not accurate at the moment. The reference resource of the phase-locked clock, which is determined under such circumstances, is not accurate. In order to avoid the occurrence of the above circumstance, after the RRU is initialized, the present invention simultaneously judges whether to switch the reference resource of the phase-locked clock which is currently used by the RRU. If the reference resource of the phase-locked clock which is currently used by the RRU needs to be switched, the new reference resource of the phase-locked clock is determined firstly to implement the switching. Otherwise, the currently used reference resource of the phase-locked clock is kept.

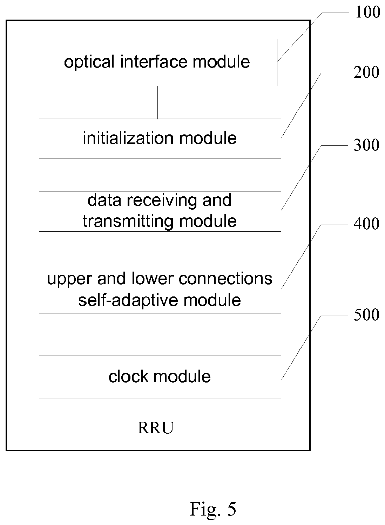

Fig. 5 is a principle block diagram of the first embodiment of the RRU of the present invention, comprising an optical interface module 100 with at least two optical interfaces, an initialization module 200, a data receiving and transmitting module 300, an upper and lower connections self-adaptive module 400, and a clock module 500, wherein,
the initialization module 200 is configured to initiate the RRU and turn off the signal transmission of each optical interface;
the data receiving and transmitting module 300 is configured to receive physical layer signalling on the corresponding optical fibre link of each optical interface in the optical interface module 100, and forward the physical layer signalling to the upper and lower connection self-adaptive module 400;
the upper and lower connections self-adaptive module 400 is configured to determine and record the upper and lower connection flag bit of each optical interface according to the existence of the alarm and/or the physical layer signalling at the optical interface;
the clock module 500 is configured to determine the reference resource of the phase-locked clock of the RRU according to the upper and lower connection flag bit, and then turn on the signal transmission of each optical interface after the phase-locked loop is locked; judge whether to switch the reference resource of the phase-locked clock of the RRU and switch the reference resource of the phase-locked clock of the RRU.

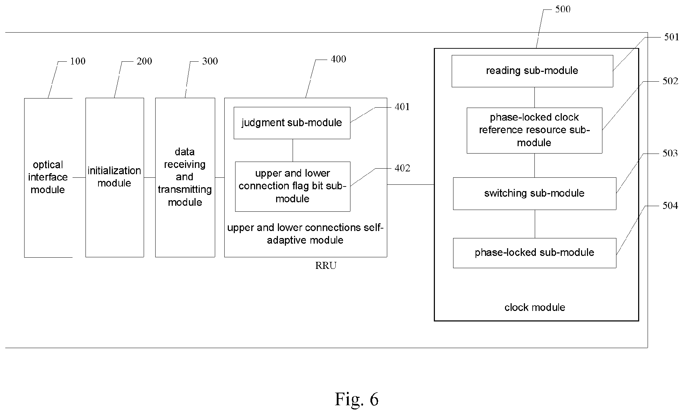

Fig. 6 is a principle block diagram of the second embodiment of the RRU of the present invention. What is similar to the first embodiment is that, it also comprises the optical interface module 100, the initialization module 200, the data receiving and transmitting module 300, the upper and lower connection self-adaptive module 400, and the clock module 500, and the difference is that the upper and lower connection self-adaptive module 400 comprises a judgment sub-module 401 and an upper and lower connection flag bit sub-module 402, and that the clock module 500 comprises a reading sub-module 501, a phase-locked clock reference resource sub-module 502, a switching sub-module 503, and a phase-locked sub-module 504, wherein
the judgment sub-module 401 is configured to judge whether there is an alarm at each optical interface, judge whether the upper and lower connection flag bits of individual optical interfaces are different, judge whether the upper and lower connection flag bit is the upper connection optical interface if the upper and lower connection flag bits of individual optical interfaces are not different, judge whether the physical layer signalling of the corresponding optical interface is abnormal when there is no alarm at the corresponding optical interface, calculate a check sum of the physical layer signalling, and judge whether a check sum carried by the physical layer signalling is consistent with the check sum acquired by calculation, and judge whether an ID carried by the physical layer signalling is in a valid ID range;
the upper and lower connection flag bit sub-module 402 is configured to record the upper and lower connection flag bit of each optical interface according to the judgment results of the judgment sub-module 401, wherein the specific method is shown as Fig. 3, i.e. set the upper and lower connection flag bit of the corresponding optical interface as a lower connection optical interface when there is an alarm at each optical interface, or when the physical layer signalling of the corresponding optical interface is abnormal, or when the check sum carried by the physical layer signalling is not consistent with the check sum acquired by calculating, or when the ID carried by the physical layer signalling is not in the valid ID range, and set the upper and lower connection flag bit of the corresponding optical interface as an upper connection optical interface when the ID carried by the physical layer signalling is in the valid ID range;
the reading sub-module 501 is configured to read the upper and lower connection flag bit of each optical interface from the upper and lower connection flag bit sub-module 402;
the phase-locked clock reference resource sub-module 502 is configured to determine the reference resource of the phase-locked clock for the RRU according to the upper and lower connection flag bit of each optical interface read by the reading sub-module 501;
the switching sub-module 503 is configured to judge whether the reading results by the reading sub-module 501 during different readings are consistent, judge whether the counting value of a counter is larger than a predetermined tolerant number, judge whether the upper and lower connection flag bit of each optical interface is consistent with the reference resource of the phase-locked clock which is currently used by the RRU, reset the counter, restart the RRU and switch the reference resource of the phase-locked loop clock for the RRU;
the phase-locked sub-module 504 is configured to turn on the signal transmission of each optical interface after the phase-locked loop is locked.

The above are only the preferred embodiments of the present invention and not intended to limit the patent scope of the present invention, and any equivalent structures or equivalent process transformations utilizing the contents of the specification and accompanying drawings of the present invention, or the direct or indirect applications of the present invention in other related technical fields shall fall within the scope of patent protection of the present invention.

## Claims

1. A self-adapting method for upper and lower connections of optical interfaces of a Radio Remote Unit, RRU, wherein the method comprises:
initiating (S201, S301) the RRU and turning off signal transmission of each optical interface of the RRU;
determining (S202) an upper and lower connection flag bit for each optical interface;
determining (S203, S312) a reference resource of a phase-locked clock of the RRU according to the upper and lower connection flag bit;
turning (S203, S313) on the signal transmission of each optical interface after a phase-locked loop is locked.

2. The method according to claim 1, wherein the upper and lower connection flag bit of each optical interface is determined (S202) according to the following way:
A1: judging whether there is an alarm at every optical interface, if YES, the upper and lower connection flag bit of the corresponding optical interface is set as a lower connection optical interface; otherwise, the upper and lower connection flag bit of the corresponding optical interface is set as an upper connection optical interface;
A2: judging whether the upper and lower connection flag bits of individual optical interfaces are different, if they are different, implementing Step A4; otherwise, implementing Step A3;
A3: judging whether the upper and lower connection flag bit is the upper connection optical interface; if it is the upper connection optical interface, implementing Step A4; otherwise, setting the upper and lower connection flag bit of each optical interface as the default value and then implementing Step A4;
A4: implementing the step in which the reference resource of the phase-locked clock of the RRU is determined.

3. The method according to claim 2, wherein, in Step A1, if there is no alarm at the corresponding optical interface, the following steps are comprised before implementing Step A2:
A11: judging whether physical layer signalling received by the corresponding optical interface is abnormal; if it is abnormal, implementing Step 14, otherwise, implementing Step A12;
A12: calculating a check sum of the physical layer signalling, and judging whether a check sum carried by the physical layer signalling is consistent with the check sum acquired by calculation, if the check sum carried by the physical layer signalling is consistent with the calculated and obtained check sum, implementing Step A13; otherwise, implementing Step A14;
A13: judging whether an Identity, ID, carried by the physical layer signalling is in a valid ID range; if the ID carried by the physical layer signalling is in the valid ID range, setting the upper and lower connection flag bit of the optical interface as an upper connection optical interface, and then implementing Step A2; otherwise, implementing Step A14;
A14: setting the upper and lower connection flag bit of the corresponding optical interface as a lower connection optical interface, and then implementing Step A2.

4. The method according to claim 1, wherein the reference resource of the phase-locked clock of the RRU is a recovered clock of the upper connection optical interface.

5. The method according to claim 1, wherein the method further comprises the following operation after initiating (S201, S301) the RRU and turning on the signal transmission of each optical interface:
judging whether to switch the reference resource of the phase-locked clock which is currently used by the RRU according to the upper and lower connection flag bit of every optical interface.

6. The method according to claim 5, wherein whether to switch the reference resource of the phase-locked clock which is currently used by the RRU is judged by the following way:
B1: periodically and continuously reading the upper and lower connection flag bit of each optical interface for predetermined times and judging whether the reading results from different readings are consistent; if YES, implementing Step B4; otherwise, implementing Step B2;
B2: adding a counter by 1, judging whether the counting value of the counter is larger than a predetermined tolerant number; if YES, implementing Step B3; otherwise, implementing Step B1;
B3: restarting the RRU, and ending the process;
B4: clearing the counter and judging whether the upper and lower connection flag bit of every optical interface is consistent with the reference resource of the phase-locked clock which is currently used by the RRU; if the upper and lower connection flag bit of each optical interface is consistent with the reference resource of the phase-locked clock which is currently used by the RRU, there is no need for switching; otherwise, implementing Step B5;
B5: re-determining a reference resource of the phase-locked clock of the RRU according to the upper and lower connection flag bit of each optical interface, and switching the reference resource of the phase-locked clock which is currently used by the RRU to the re-determined reference resource of the phase-locked clock of the RRU.

7. An Radio Remote Unit, RRU, comprising an optical interface module (100) with at least two optical interfaces, an initialization module (200), and a clock module (500), wherein the RRU further comprises an upper and lower connection self-adaptive module (400), wherein
the initialization module (200) is configured to initiate the RRU and turn off signal transmission of each optical interface of the optical interface module (100);
the upper and lower connection self-adaptive module (400) is configured to determine and record an upper and lower connection flag bit for each optical interface;
the clock module (500) is configured to determine a reference resource of a phase-locked clock of the RRU according to the upper and lower connection flag bit, and turn on the signal transmission of each optical interface after a phase-locked loop is locked.

8. The RRU according to claim 7, wherein the RRU further comprises a data receiving and transmitting module (300) configured to receive physical layer signalling on the corresponding optical fiber link of each optical interface in the optical interface module (100), and forward the physical layer signalling to the upper and lower connection self-adaptive module (400);
the clock module (500) is further configured to judge whether to switch the reference resource of the phase-locked clock of the RRU, and switch the reference resource of the phase-locked clock of the RRU if the judgment result is YES.

9. The RRU according to claim 7, wherein the upper and lower connection self-adaptive module (400) comprises a judgment sub-module (401) and an upper and lower connection flag bit sub-module (402), wherein
the judgment sub-module (401) is configured to judge whether there is an alarm at each optical interface, judge whether the upper and lower connection flag bits of individual optical interfaces are different, judge whether the upper and lower connection flag bit is the upper connection optical interface if the upper and lower connection flag bits of individual optical interfaces are not different, judge whether the physical layer signalling of the corresponding optical interface is abnormal when there is no alarm at the corresponding optical interface, calculate a check sum of the physical layer signalling, and judge whether a check sum carried by the physical layer signalling is consistent with the check sum acquired by the calculation, and judge whether an ID carried by the physical layer signalling is in a valid ID range;
the upper and lower connection flag bit sub-module (402) is configured to record the upper and lower connection flag bit of each optical interface according to the judgment results of the judgment sub-module (401), set the upper and lower connection flag bit of the corresponding optical interface as a lower connection optical interface when there is an alarm at each optical interface, or when the physical layer signalling of the corresponding optical interface is abnormal, or when the check sum carried by the physical layer signalling is not consistent with the check sum acquired by the calculation, or when the ID carried by the physical layer signalling is not in the valid ID range, and set the upper and lower connection flag bit of the corresponding optical interface as an upper connection optical interface when the ID carried by the physical layer signalling is in the valid ID range.

10. The RRU according to claim 7, 8 or 9, wherein the clock module (500) comprises a reading sub-module (501), a phase-locked clock reference resource sub-module (502), a switching sub-module (503) and a phase-locked sub-module (504), wherein
the reading sub-module (501) is configured to read the upper and lower connection flag bit of each optical interface;
the phase-locked clock reference resource sub-module (502) is configured to determine the reference resource of the phase-locked clock for the RRU;
the switching sub-module (503) is configured to judge whether or not the reading results by the reading sub-module (501) during different readings are consistent, judge whether a counting value of the counter is larger than a predetermined tolerant number, judge whether the upper and lower connection flag bit of each optical interface is consistent with the reference resource of the phase-locked clock which is currently used by the RRU, clear the counter, restart the RRU and switch the reference resource of the phase-locked clock for the RRU; and
the phase-locked sub-module (504) is configured to turn on the signal transmission of each optical interface after the phase-locked loop is locked.

## Patentansprüche

1. Selbst-anpassendes Verfahren für obere und untere Verbindungen von optischen Schnittstellen einer Funkferneinheit, RRU, wobei das Verfahren Folgendes umfasst:
Initialisieren (S201, S301) der RRU und Abschalten von Signalübertragung jeder optischen Schnittstelle der RRU;
Bestimmen (S202) eines oberen und unteren Verbindungs-Flag-Bits für jede optische Schnittstelle;
Bestimmen (S203, S312) einer Referenzquelle eines phasengeregelten Taktes der RRU anhand des oberen und unteren Verbindungs-Flag-Bits;
Einschalten (S203, S313) der Signalübertragung jeder optischen Schnittstelle, nachdem eine Phasenregelschleife abgeschlossen ist.

2. Verfahren nach Anspruch 1, wobei das untere und obere Verbindungs-Flag-Bit jeder optischen Schnittstelle auf die folgende Weise bestimmt (S202) wird:
A1: Beurteilen, ob ein Alarm an jeder optischen Schnittstelle vorhanden ist, wenn JA, wird das obere und untere Verbindungs-Flag-Bit der entsprechenden optischen Schnittstelle als untere optische Verbindungs-Schnittstelle eingestellt; andernfalls wird das obere und untere Verbindungs-Flag-Bit der entsprechenden optischen Schnittstelle als obere optische Verbindungs-Schnittstelle eingestellt;
A2: Beurteilen, ob die oberen und unteren Verbindungs-Flag-Bits von individuellen optischen Schnittstellen unterschiedlich sind, wenn sie unterschiedlich sind, Ausführen von Schritt A4; andernfalls Ausführen von Schritt A3;
A3: Beurteilen, ob das obere und untere Verbindungs-Flag-Bit die obere optische Verbindungs-Schnittstelle ist; wenn es die obere optische Verbindungs-Schnittstelle ist, Ausführen von Schritt A4; andernfalls Einstellen des oberen und unteren Verbindungs-Flag-Bits jeder optischen Schnittstelle als Standardwert und dann Ausführen von Schritt A4;
A4: Ausführen des Schrittes, in welchem die Referenzquelle des phasengeregelten Taktes der RRU bestimmt wird.

3. Verfahren nach Anspruch 2, wobei Schritt A1, wenn kein Alarm an der entsprechenden optischen Schnittstelle vorhanden ist, vor dem Ausführen von Schritt A2 die folgenden Schritte umfasst:
A11: Beurteilen, ob von der entsprechenden optischen Schnittstelle empfangene Physikalische-Schicht-Signalgebung abnormal ist; wenn sie abnormal ist, Ausführen von Schritt 14, andernfalls Ausführen von Schritt A12;
A12: Berechnen einer Prüfsumme der Physikalische-Schicht-Signalisierung und Beurteilen, ob eine von der physikalischen Schicht-Signalisierung mitgeführte Prüfsumme mit der aus der Berechnung erhaltenen Prüfsumme vereinbar ist, wenn die von der Physikalische-Schicht-Signalisierung mitgeführte Prüfsumme mit der berechneten und erhaltenen Prüfsumme vereinbar ist, Ausführen von Schritt A13; andernfalls Ausführen von Schritt A14;
A13: Beurteilen, ob sich eine von der Physikalische-Schicht-Signalgebung mitgeführte Identität, ID, in einem gültigen ID-Bereich befindet; wenn sich die von der Physikalische-Schicht-Signalgebung mitgeführte ID in dem gültigen ID-Bereich befindet, Einstellen des oberen und unteren Verbindungs-Flag-Bits der optischen Schnittstelle als obere optische Verbindungs-Schnittstelle und dann Ausführen von Schritt A2; andernfalls Ausführen von Schritt A14;
A14: Einstellen des oberen und unteren Verbindungs-Flag-Bits der entsprechenden optischen Schnittstelle als untere optische Verbindungs-Schnittstelle und dann Ausführen von Schritt A2.

4. Verfahren nach Anspruch 1, wobei die Referenzquelle des phasengeregelten Taktes der RRU ein wiederhergestellter Takt der oberen optischen Verbindungs-Schnittstelle ist.

5. Verfahren nach Anspruch 1, wobei das Verfahren nach dem Initialisieren (S201, S301) der RRU und dem Einschalten der Signalübertragung jeder optischen Schnittstelle weiter den folgenden Ablauf umfasst:
Beurteilen anhand des oberen und unteren Verbindungs-Flag-Bits jeder optischen Schnittstelle, ob die von der RRU aktuell verwendete Referenzquelle des phasengeregelten Taktes umzuschalten ist.

6. Verfahren nach Anspruch 5, wobei auf die folgende Weise beurteilt wird, ob die aktuell von der RRU verwendete Referenzquelle des phasengeregelten Taktes umzuschalten ist:
B1: periodisches und durchgehendes Auslesen des oberen und unteren Verbindungs-Flag-Bits jeder optischen Schnittstelle für vorher festgelegte Zeiten und Beurteilen, ob die Auslese-Ergebnisse aus verschiedenen Auslesungen konsistent sind; wenn JA, Ausführen von Schritt B4, andernfalls Ausführen von Schritt B2;
B2: Hinzufügen eines 1-stufigen Zählers, Beurteilen, ob der Zählwert des Zählers größer ist als ein vorher festgelegter Toleranzwert; wenn JA, Ausführen von Schritt B3; andernfalls Ausführen von Schritt B1;
B3: Neustarten der RRU und Beenden des Vorgangs;
B4: Bereinigen des Zählers und Beurteilen, ob das obere und untere Verbindungs-Flag-Bit jeder optischen Schnittstelle mit der aktuell von der RRU verwendeten Referenzquelle des phasengeregelten Taktes vereinbar ist; wenn das obere und untere Verbindungs-Flag-Bit jeder optischen Schnittstelle mit der aktuell von der RRU verwendeten Referenzquelle des phasengeregelten Taktes vereinbar ist, ist kein Umschalten erforderlich; andernfalls Ausführen von Schritt B5;
B5: Neubestimmen einer Referenzquelle des phasengeregelten Taktes der RRU anhand des oberen und unteren Verbindungs-Flag-Bits jeder optischen Schnittstelle und Umschalten der aktuell von der RRU verwendeten Referenzquelle des phasengeregelten Taktes auf die neubestimmte Referenzquelle des phasengeregelten Taktes der RRU.

7. Funkferneinheit, RRU, umfassend ein Optische-Schnittstellen-Modul (100) mit wenigstens zwei optischen Schnittstellen, ein Initialisierungsmodul (200) und ein Taktmodul (500), wobei die RRU weiter ein selbst-anpassendes Obere-und-untere-Verbindungs-Modul (400) umfasst, wobei
das Initialisierungsmodul (200) dafür ausgelegt ist, die RRU zu initialisieren und Signalübertragung von jeder optischen Schnittstelle des Optische-Schnittstelle-Moduls (100) abzuschalten;
das selbst-anpassende Obere-und-untere-Verbindungs-Modul (400) dafür ausgelegt ist, ein oberes und unteres Verbindungs-Flag-Bit für jede optische Schnittstelle zu bestimmen und aufzuzeichnen;
das Taktmodul (500) dafür ausgelegt ist, anhand des oberen und unteren Verbindungs-Flag-Bits eine Referenzquelle eines phasengeregelten Taktes der RRU zu bestimmen und die Signalübertragung jeder optischen Schnittstelle einzuschalten, nachdem eine Phasenregelschleife abgeschlossen ist.

8. RRU nach Anspruch 7, wobei die RRU weiter ein Datenempfangs- und -sendemodul (300) umfasst, dafür ausgelegt, Physikalische-Schicht-Signalisierung an der entsprechenden optischen Faserverbindung jeder optischen Schnittstelle in dem Optische-Schnittstellen-Modul (100) zu empfangen und die Physikalische-Schicht-Signalisierung an das selbst-anpassende Obere-und-Untere-Verbindungs-Modul (400) weiterzuleiten;
das Taktmodul (500) weiter dafür ausgelegt ist, zu beurteilen, ob die Referenzquelle des phasengeregelten Taktes der RRU umzuschalten ist und die Referenzquelle des phasengeregelten Taktes der RRU umzuschalten, wenn das Beurteilungsergebnis JA ist.

9. RRU nach Anspruch 7, wobei das selbst-anpassende Obere-und-untere-Verbindungs-Modul (400) ein Beurteilungs-Untermodul (401) und ein Obere-und-untere-Verbindungs-Flag-Bit-Untermodul (402) umfasst, wobei
das Beurteilungs-Untermodul (401) dafür ausgelegt ist, zu beurteilen, ob ein Alarm an jeder optischen Schnittstelle vorhanden ist, zu beurteilen, ob die oberen und unteren Verbindungs-Flag-Bits von individuellen optischen Schnittstellen unterschiedlich sind, zu beurteilen, ob das obere und untere Verbindungs-Flag-Bit die obere optische Verbindungs-Schnittstelle ist, wenn die oberen und unteren Verbindungs-Flag-Bits von individuellen optischen Schnittstellen nicht unterschiedlich sind, zu beurteilen, ob die Physikalische-Schicht-Signalisierung der entsprechenden optischen Schnittstelle abnormal ist, wenn kein Alarm an der entsprechenden optischen Schnittstelle vorhanden ist, eine Prüfsumme der Physikalische-Schicht-Signalisierung zu berechnen, und zu beurteilen, ob eine von der Physikalische-Schicht-Signalisierung mitgeführte Prüfsumme mit der aus der Berechnung erhaltenen Prüfsumme vereinbar ist, und zu beurteilen, ob sich eine von der Physikalische-Schicht-Signalgebung mitgeführte ID in einem gültigen ID-Bereich befindet;
das obere und untere Verbindungs-Flag-Bit-Modul (402) dafür ausgelegt ist, das obere und untere Verbindungs-Flag-Bit jeder optischen Schnittstelle anhand der Beurteilungsergebnisse des Beurteilungs-Untermoduls (401) aufzuzeichnen, das obere und untere Verbindungs-Flag-Bit der entsprechenden optischen Schnittstelle als untere optische Verbindungs-Schnittstelle einzustellen, wenn ein Alarm an jeder optischen Schnittstelle vorhanden ist, oder wenn die Physikalische-Schicht-Signalgebung der entsprechenden optischen Schnittstelle abnormal ist, oder wenn die von der Physikalische-Schicht-Signalisierung mitgeführte Prüfsumme nicht mit der aus der Berechnung erhaltenen Prüfsumme vereinbar ist, oder wenn sich die von der Physikalische-Schicht-Signalgebung mitgeführte ID nicht in dem gültigen ID-Bereich befindet, und das obere und untere Verbindungs-Flag-Bit der entsprechenden optischen Schnittstelle als obere optische Verbindungs-Schnittstelle einzustellen, wenn sich die von der Physikalische-Schicht-Signalgebung mitgeführte ID in dem gültigen ID-Bereich befindet.

10. RRU nach Anspruch 7, 8 oder 9, wobei das Taktmodul (500) ein Auslese-Untermodul (501), ein Phasengeregelter-Takt-Referenzquellen-Untermodul (502), ein Umschalt-Untermodul (503) und ein phasengeregeltes Untermodul (504) umfasst, wobei
das Auslese-Untermodul (501) dafür ausgelegt ist, das obere und untere Verbindungs-Flag-Bit jeder optischen Schnittstelle auszulesen;
das Phasengeregelter-Takt-Referenzquellen-Untermodul (502) dafür ausgelegt ist, die Referenzquelle des phasengeregelten Taktes für die RRU zu bestimmen;
das Umschalt-Untermodul (503) dafür ausgelegt ist, zu beurteilen, ob die Ausleseergebnisse des Auslese-Untermoduls (501) während verschiedenen Auslesungen konsistent sind oder nicht, zu beurteilen, ob ein Zählwert des Zählers größer ist als ein vorher festgelegter Toleranzwert, zu beurteilen, ob das obere und untere Verbindungs-Flag-Bit jeder optischen Schnittstelle mit der aktuell von der RRU verwendeten Referenzquelle des phasengeregelten Taktes vereinbar ist, den Zähler zu bereinigen, die RRU neu zu starten und die Referenzquelle des phasengeregelten Taktes für die RRU umzuschalten; und
das phasengeregelte Untermodul (504) dafür ausgelegt ist, die Signalübertragung jeder optischen Schnittstelle einzuschalten, nachdem die Phasenregelschleife abgeschlossen ist.

## Revendications

1. Procédé auto-adaptatif pour des connexions supérieure et inférieure d'interfaces optiques d'une unité radio distante, RRU, dans lequel le procédé comprend :
l'initiation (S201, S301) de la RRU et la mise à l'arrêt de la transmission de signal de chaque interface optique de la RRU ;
la détermination (S202) d'un bit indicateur de connexions supérieure et inférieure pour chaque interface optique ;
la détermination (S203, S312) d'une ressource de référence d'une horloge à verrouillage de phase de la RRU selon le bit indicateur de connexions supérieure et inférieure ;
la mise en marche (S203, S313) de la transmission de signal de chaque interface optique après qu'une boucle de verrouillage de phase a été verrouillée.

2. Procédé selon la revendication 1, dans lequel le bit indicateur de connexions supérieure et inférieure de chaque interface optique est déterminé (S202) de la manière suivante :
A1 : estimer s'il y a une alarme à toute interface optique, si OUI, le bit indicateur de connexions supérieure et inférieure de l'interface optique correspondante est réglé en tant qu'interface optique de connexion inférieure ; dans le cas contraire, le bit indicateur de connexions supérieure et inférieure de l'interface optique correspondante est réglé en tant qu'interface optique de connexion supérieure ;
A2 : estimer si les bits indicateurs de connexions supérieure et inférieure d'interfaces optiques individuelles sont différents, s'ils sont différents, mettre en oeuvre l'étape A4 ; dans le cas contraire, mettre en oeuvre l'étape A3 ;
A3 : estimer si le bit indicateur de connexions supérieure et inférieure est l'interface optique de connexion supérieure ; s'il est l'interface optique de connexion supérieure, mettre en oeuvre l'étape A4 ; dans le cas contraire, régler le bit indicateur de connexions supérieure et inférieure de chaque interface optique en tant que valeur par défaut et ensuite mettre en oeuvre l'étape A4 ;
A4 : mettre en oeuvre l'étape au cours de laquelle la ressource de référence de l'horloge à verrouillage de phase de la RRU est déterminée.

3. Procédé selon la revendication 2, dans lequel, au cours de l'étape A1, s'il n'y a pas d'alarme à l'interface optique correspondante, sont comprises, avant de mettre en oeuvre l'étape A2, les étapes suivantes consistant à :
A11 : estimer si une signalisation de couche physique reçue par l'interface optique correspondante est anormale ; si elle est anormale, mettre en oeuvre l'étape 14, dans le cas contraire, mettre en oeuvre l'étape A12 ;
A12 : calculer une somme de contrôle de la signalisation de couche physique, et estimer si une somme de contrôle transportée par la signalisation de couche physique est cohérente avec la somme de contrôle acquise par calcul, si la somme de contrôle transportée par la signalisation de couche physique est cohérente avec la somme de contrôle calculée et obtenue, mettre en oeuvre l'étape A13 ; dans le cas contraire, mettre en oeuvre l'étape A14 ;
A13 : estimer si une identité, ID, transportée par la signalisation de couche physique est dans une plage d'ID valide ; si l'ID transportée par la signalisation de couche physique est dans la plage d'ID valide, régler le bit indicateur de connexions supérieure et inférieure de l'interface optique en tant qu'interface optique de connexion supérieure, et ensuite mettre en oeuvre l'étape A2 ; dans le cas contraire, mettre en oeuvre l'étape A14 ;
A14 : établir le bit indicateur de connexions supérieure et inférieure de l'interface optique correspondante en tant qu'interface optique de connexion inférieure, et ensuite mettre en oeuvre l'étape A2.

4. Procédé selon la revendication 1, dans lequel la ressource de référence de l'horloge à verrouillage de phase de la RRU est une horloge récupérée de l'interface optique de connexion supérieure.

5. Procédé selon la revendication 1, dans lequel le procédé comprend en outre l'opération suivante après l'initiation (S201, S301) de la RRU et la mise en marche de la transmission de signal de chaque interface optique :
l'estimation s'il faut commuter la ressource de référence de l'horloge à verrouillage de phase qui est utilisée actuellement par la RRU selon le bit indicateur de connexions supérieure et inférieure de toute interface optique.

6. Procédé selon la revendication 5, dans lequel le fait de savoir s'il faut commuter la ressource de référence de l'horloge à verrouillage de phase qui est utilisée actuellement par la RRU est estimé de la manière suivante :
B1 : lire périodiquement et en continu le bit indicateur de connexions supérieure et inférieure de chaque interface optique pour des temps prédéterminés et estimer si les résultats de lecture à partir de différentes lectures sont cohérents ; si OUI, mettre en oeuvre l'étape B4 ; dans le cas contraire, mettre en oeuvre l'étape B2 ;
B2 : ajouter un compteur par 1, estimer si la valeur de comptage du compteur est supérieure à un nombre de tolérance prédéterminé ; si OUI, mettre en oeuvre l'étape B3 ; dans le cas contraire, mettre en oeuvre l'étape B1 ;
B3 : redémarrer la RRU, et mettre fin au processus ;
B4 : nettoyer le compteur et estimer si le bit indicateur de connexions supérieure et inférieure de toute interface optique est cohérent avec la ressource de référence de l'horloge à verrouillage de phase qui est utilisée actuellement par la RRU ; si le bit indicateur de connexions supérieure et inférieure de chaque interface optique est cohérent avec la ressource de référence de l'horloge à verrouillage de phase qui est utilisée actuellement par la RRU, il n'y a pas besoin d'une commutation ; dans le cas contraire, mettre en oeuvre l'étape B5 ;
B5 : redéterminer une ressource de référence de l'horloge à verrouillage de phase de la RRU selon le bit indicateur de connexions supérieure et inférieure de chaque interface optique, et commuter la ressource de référence de l'horloge à verrouillage de phase qui est utilisée actuellement par la RRU vers la ressource de référence redéterminée de l'horloge à verrouillage de phase de la RRU.

7. Unité radio distante, RRU, comprenant un module d'interface optique (100) avec au moins deux interfaces optiques, un module d'initialisation (200), et un module d'horloge (500), dans laquelle la RRU comprend en outre un module auto-adaptatif de connexions supérieure et inférieure (400), dans laquelle
le module d'initialisation (200) est configuré pour initier la RRU et mettre à l'arrêt une transmission de signal de chaque module d'interface optique de l'interface optique (100) ;
le module auto-adaptatif de connexions supérieure et inférieure (400) est configuré pour déterminer et enregistrer un bit indicateur de connexions supérieure et inférieure pour chaque interface optique ;
le module d'horloge (500) est configuré pour déterminer une ressource de référence d'une horloge à verrouillage de phase de la RRU selon le bit indicateur de connexions supérieure et inférieure, et mettre en marche la transmission de signal de chaque interface optique après qu'une boucle de verrouillage de phase a été verrouillée.

8. RRU selon la revendication 7, dans laquelle la RRU comprend en outre un module de réception et de transmission de données (300) configuré pour recevoir une signalisation de couche physique sur le lien de fibre optique correspondant de chaque interface optique dans le module d'interface optique (100), et envoyer la signalisation de couche physique au module auto-adaptatif de connexions supérieure et inférieure (400) ;
le module d'horloge (500) est configuré en outre pour estimer s'il faut commuter la ressource de référence de l'horloge à verrouillage de phase de la RRU, et commuter la ressource de référence de l'horloge à verrouillage de phase de la RRU si le résultat de l'estimation est OUI.

9. RRU selon la revendication 7, dans laquelle le module auto-adaptatif de connexions supérieure et inférieure (400) comprend un sous-module d'estimation (401) et un sous-module de bit indicateur de connexions supérieure et inférieure (402), dans laquelle
le sous-module d'estimation (401) est configuré pour estimer s'il y a une alarme à chaque interface optique, estimer si les bits indicateurs de connexions supérieure et inférieure d'interfaces optiques individuelles sont différents, estimer si le bit indicateur de connexions supérieure et inférieure est l'interface optique de connexion supérieure si les bits indicateurs de connexions supérieure et inférieure d'interfaces optiques individuelles ne sont pas différents, estimer si la signalisation de couche physique de l'interface optique correspondante est anormale lorsqu'il n'y a pas d'alarme à l'interface optique correspondante, calculer une somme de contrôle de la signalisation de couche physique, et estimer si une somme de contrôle transportée par la signalisation de couche physique est cohérente avec la somme de contrôle acquise par le calcul, et estimer si une ID transportée par la signalisation de couche physique est dans une plage d'ID valide ;
le sous-module de bit indicateur de connexions supérieure et inférieure (402) est configuré pour enregistrer le bit indicateur de connexions supérieure et inférieure de chaque interface optique selon les résultats du sous-module d'estimation (401), régler le bit indicateur de connexions supérieure et inférieure de l'interface optique correspondante en tant qu'interface optique de connexion inférieure lorsqu'il y a une alarme à chaque interface optique, ou lorsque la signalisation de couche physique de l'interface optique correspondante est anormale, ou lorsque la somme de contrôle transportée par la signalisation de couche physique n'est pas cohérente avec la somme de contrôle acquise par le calcul, ou lorsque l'ID transportée par la signalisation de couche physique n'est pas dans la plage d'ID valide, et régler le bit indicateur de connexions supérieure et inférieure de l'interface optique correspondante en tant qu'interface optique de connexion supérieure lorsque l'ID transportée par la signalisation de couche physique est dans la plage d'ID valide.

10. RRU selon la revendication 7, 8 ou 9, dans laquelle le module d'horloge (500) comprend un sous-module de lecture (501), un sous-module de ressource de référence d'horloge à verrouillage de phase (502), un sous-module de commutation (503) et un sous-module de verrouillage de phase (504), dans laquelle
le sous-module de lecture (501) est configuré pour lire le bit indicateur de connexions supérieure et inférieure de chaque interface optique ;
le sous-module de ressource de référence d'horloge à verrouillage de phase (502) est configuré pour déterminer la ressource de référence de l'horloge à verrouillage de phase pour la RRU ;
le sous-module de commutation (503) est configuré pour estimer si les résultats de lecture par le sous-module de lecture (501) pendant différentes lectures sont cohérents ou non, estimer si une valeur de comptage du compteur est supérieure à un nombre de tolérance prédéterminé, estimer si le bit indicateur de connexions supérieure et inférieure de chaque interface optique est cohérent avec la ressource de référence de l'horloge à verrouillage de phase qui est utilisée actuellement par la RRU, nettoyer le compteur, redémarrer la RRU et commuter la ressource de référence de l'horloge à verrouillage de phase pour la RRU ; et
le sous-module de verrouillage de phase (504) est configuré pour mettre en marche la transmission de signal de chaque interface optique après que la boucle de verrouillage de phase a été verrouillée.
